# EUROPEAN PATENT APPLICATION

(11) **EP 0 762 186 A2**
(43) Date of publication of application: **12.03.1997**
(21) Application number: 96420287.3
(22) Date of filing: 04.09.1996
(51) Int. Cl.: G03B 1/60

(54) **Metering measurement in a cassette for a photosensitive product**

(30) Priority: 11.09.1995 FR 9510790
(71) Applicant: KODAK-PATHE, F-75594 Paris Cedex 12 (FR); EASTMAN KODAK COMPANY, Rochester, New York 14650-2201 (US)
(72) Inventor: Belval, Frédéric Robert, 71102 Chalon sur Saone Cedex (FR); Beauviala, Jean-Pierre Marc, 38000 Grenoble (FR); Croft, John Douglas, Hemel Henpstead, Herts HP1 1RW (GB); Riviere, Yves Alain, 38170 Seyssinet (FR)
(74) Representative: Buff, Michel

(57) **Abstract**

The invention concerns a cassette for a photosensitive product.

The cassette comprises: a) a light-tight case; b) at least one roll of the photosensitive product wound on a core, the core being rotatably mounted inside the case; and c) means for indicating the quantity of photosensitive product remaining in the case; the indication means including means for determining the angle of rotation of the core in response to the unwinding of a given length of the photosensitive product, the angle being representative of the quantity of product remaining on the core.

## Description

### Field of the invention

The invention concerns the field of cassettes used for the packaging of photosensitive products. It concerns in particular cinematographic films of the 16 or 35 mm type.

### Background of the Invention

The invention notably finds an application in the field of cassettes of the type having two coaxial cores contained in a light-tight case, a first core on which the photosensitive product is wound before exposure, and a second core on which the film is wound after exposure, the cores being arranged so that the film follows an endless loop in the course of which it leaves the case by means of a first light-tight slot, passes in front of the exposure window of a camera and winds onto the second core. Such cassettes are described in more detail in the patent application FR 95/08071 filed on 29 June 1995 and entitled: "Cassette for cinematographic film".

A first problem related to the use of such cassettes relates to the fact that it is difficult, because of the photosensitive nature of the product which they contain and the light-tightness of the case, to determine the length of unexposed film remaining in the cassette. Generally, this problem is resolved by means of devices with sensors bearing on the roll of film and giving an indication of the footage remaining in the cassette. This approach has the drawback of adding to the process of manufacturing and assembling the cassette and therefore increasing the cost thereof. This problem is posed in the same way for other types of cassette, notably for cassettes of the single core type.

Likewise, with cassettes of the type having two coaxial cores, it is desirable to be able, notably during their transportation, to immobilise the cores so that the film does not unwind unintentionally, which could make it difficult to use them subsequently. This problem is particularly critical when the film is being changed or when filming is stopped before the end of the cassette and it is desired subsequently to restart the same cassette substantially at the same position.

Finally, with these cassettes for a photosensitive product in strip form, it is desirable to provide simple mechanisms for manually rewinding the film over relatively short lengths, for example at the start or end of a strip or when a partially exposed cassette is reused.

### Summary of the invention

Thus one of the objects of the present invention is to provide a cassette having, wholly or partially, the functions mentioned above and not presenting the drawbacks of the solutions traditionally used.

Another object of the present invention is to provide a cassette with a simple mechanism for measuring the footage of unexposed film remaining in a photosensitive product cassette.

Further objects will emerge in more detail in the following description.

These objects are achieved according to the present invention by means of a cassette for a photosensitive product comprising:
a) a light-tight case;
b) at least one roll of the photosensitive product wound on a core, the core being rotatably mounted inside the case and having a central hole designed to receive drive means of a camera for the purpose of winding/unwinding the photosensitive product through at least one light-tight slot provided in the case; and
c) means for indicating the quantity of photosensitive product remaining on the core;
said cassette being characterised in that the indication means include means for determining the angle of rotation of the core in response to the unwinding of a given length of the photosensitive product, the angle being representative of the quantity of product remaining on the core.

Advantageously, the indication means comprise an element, at least part of which is visible from outside the case and mounted so as to be able to be rotated by the movement of the roll in response to the unwinding of the said given length, the case and the element including register means for determining the angle of rotation of the core.

By way of example, the element has a mark whose angular position, after unwinding of the given length, with respect to a graduation scale provided on the case, represents the length of photosensitive product remaining on the said roll.

According to a first aspect of the invention, the cassette comprises:
i) a first core on which the photosensitive product is wound before exposure;
ii) a second core designed to receive the photosensitive product after exposure, the first and second cores being mounted so that the photosensitive product follows an endless loop in the course of which the film wound on the first core leaves the case by means of a first light-tight slot, passes in front of an exposure window of the camera and situated outside the case, and winds onto the second core by means of a second light-tight slot.

The cores are preferably disposed so as to have their respective central recesses aligned so as to receive, through a principal orifice formed in the case, a drive spindle of the camera, the said indication means comprising a removable element designed to be inserted in the principal orifice and to occupy selectively a first axial position with respect to the case and in which the element rotatably engages the first core so that a rotation of the first core in response to the unwinding of the given length causes a corresponding rotation of the removable element. Alternatively, the removable element can selectively occupy a second axial position with respect to the case and in which it rotatably engages the second core. Alternatively again, the removable element can selectively occupy a third axial position with respect to the case and in which it rotatably engages the first core and the second roll so as to lock them together with respect to rotation, locking means being provided for immobilising the rolls with respect to the case.

Advantageously the removable element comprises a cylindrical element of a diameter slightly less than the diameter of the cores and one end of which has a surface perpendicular to the axis of the cylinder, of a diameter substantially equal to or preferably greater than the diameter of the principal orifice so as to complete the light-tightness of the case when the removable element is in the third position.

Advantageously again, the removable element and the cores include means designed to cooperate with each other in order to selectively immobilise the removable element in the first, second or third position. By way of example, the immobilisation means include elastically deformable members provided on the removable element and designed to cooperate with corresponding recesses formed in the internal surface of the cores.

Finally, according to another aspect of the invention, a method is provided for measuring the quantity of photosensitive product present on a core rotatably mounted inside a light-tight case, the method comprising the following steps:
a) unwinding a given length of photosensitive product;
b) determining the angle of rotation of the core in response to the unwinding of the given length, the angle being representative of the quantity of photosensitive product remaining on the core.

### Brief Description of the Drawings

In the following description, reference will be made to the drawings, amongst which:
- Figure 1 is an exploded view of a cassette as described in the application FR 95/08071 and to which the invention particularly applies;
- Figures 2A-2B depict different views of the cassette illustrated in Figure 1;
- Figures 3A-3D illustrate diagrammatically the functioning of a preferred embodiment of the cassette according to the invention; and
- Figure 4 depicts a plan view of a preferred embodiment of the cassette according to the invention.

### Detailed Description of the Preferred Embodiment

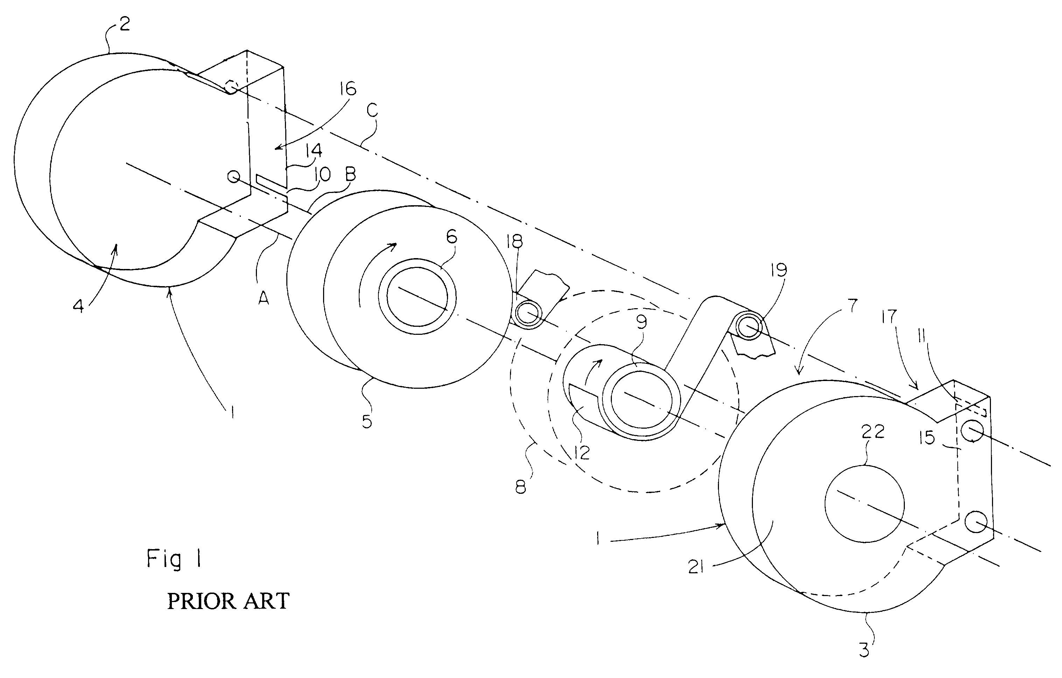

The cassette depicted in Figure 1 consists of a case 1 made of a light-tight material, for example opaque plastic, and comprising two shells 2 and 3 suitable for being connected by the free ends of their respective walls.

A first shell 2 defines a first principal housing 4 for receiving a supply spool 5 of unexposed film mounted on a first core 6. A second shell 3 defines a second housing 7 for receiving, on a second core 9, the film after exposure. The spools are coaxial (Axis A).

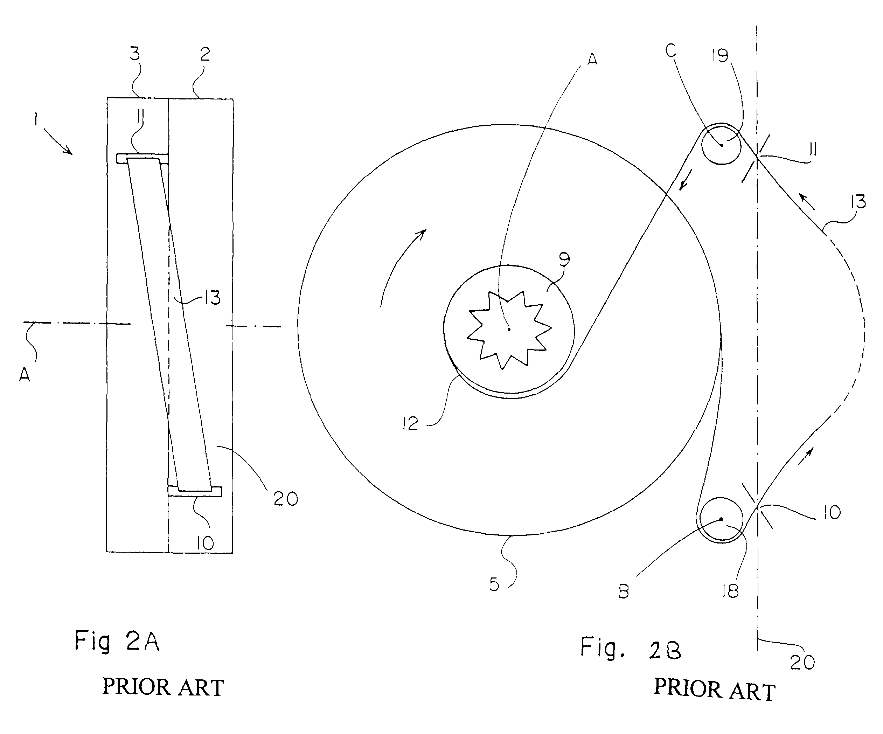

Each shell 2, 3 has, in one of its walls, a slot, respectively 10 or 11, intended for the film to pass between each of the housings 4 or 7 and the outside of the case 1. These slots define a path for the film between the spool 5 and the spool 8. A leader 12 on the unexposed spool 5 is fixed, for example by gluing, to the core 9, leaving the housing 4 through the slot 10 and entering the housing 7 through the slot 11 (see Figures 2A and 2B). A portion 13 is intended to follow a path imposed by rollers of a device (not shown) for receiving the cassette associated with a camera, in order to pass in front of an exposure window.

The slots 10 and 11 are preferably formed in walls 14 and 15 in each shell, respectively 2 or 3, outside the principal housing, respectively 4 and 7, which it defines. In fact, each shell 2 or 3 also defines, according to the invention, a secondary housing, respectively 16 or 17, designed to receive, with axial and radial clearance, a roller, respectively 18 and 19, for returning the film from each spool 5, 8 towards the slot, respectively 10 or 11, with which it is associated. In fact, and as Figure 2B illustrates, the roller 18 returns the unexposed strip from the spool 5 to the slot 10 and the roller 19 returns the exposed film from the slot 11 to the core 9 or spool 8. The axes, respectively B and C, of the rollers 18 and 19 are parallel to the axis A of the cores 6 and 9.

The second shell 3 has in its base 21 a first orifice 22 designed for the passage of a principal shaft (not shown) of a drive mechanism integrated in the reception device or in the optical unit of the camera.

The principal shaft of the reception device is a shaft on which a first portion is designed to receive the second core 9 and is driving. A second portion of the main shaft is free to rotate, or slightly braked, and is intended to receive the first core 6. The cores 6 and 9 are, as shown in Figure 2B, toothed or fluted (over at least part of their axial length, as will be seen in more detail later) on their internal surface so as to be able to be rotatably connected to the portion of the main shaft with which they are respectively associated. According to a variant, the second portion of the main shaft is driving and the first one free to rotate.

The orifice 22 has a diameter slightly greater than the external diameter of the main shaft and therefore slightly greater than the internal diameter of the cores 6 and 9, and slightly less than the external diameter of the cores 6 and 9. Thus the core is not able to come out of the assembled case.

This description of cassette with two coaxial cores is given only by way of example. It is clear that the concepts of the invention, at least with regard to the measurement of the remaining footage, can be applied in the same way to a cassette with a single core, or even to a cassette of the video type, with two non-coaxial cores.

According to an important characteristic of the present invention, means are provided for measuring the quantity of film remaining on the supply spool 5. The principle of the measurement is as follows: a given length of film is unwound, and the angle of rotation of the core carrying the supply spool is measured, the said angle representing the length of film remaining on the core. This is because, when a given length of film is unwound, the angle of rotation of the core varies according to an inverse function with the diameter of the turns of the film on the spool, that is to say the film footage remaining on the core.

Unwinding a given length of film is performed manually by an operator by pulling on the film, the length of film unwound advantageously being indicated by the corresponding number of perforations emerged from the cassette and present at regular intervals on the film on at least one of its edges. Other references or visual indicators can be produced on the cassette to indicate to the operator the length of film which must be unwound.

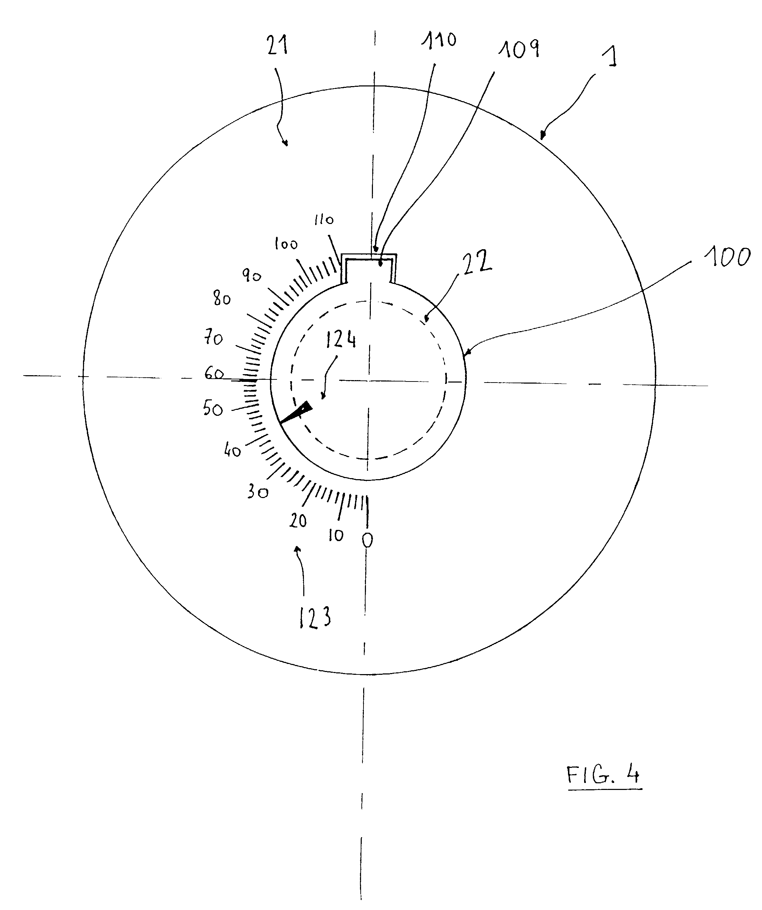

The angle of rotation of the core (or directly the footage remaining) is read by means of indicators (123, 124, Fig 4) present firstly on the case and secondly on a component, part of which at least is visible from the outside of the case and fixed (at least selectively) with respect to rotation to the core whose remaining footage is to be measured. By way of example, the part visible from the outside bears a mark 124, which is disposed opposite a graduation scale 123 on the bottom 21 of the case, around the orifice 22. According to an alternative, the graduation scale is provided on the component driven by the supply spool, the mark being provided on the bottom 21.

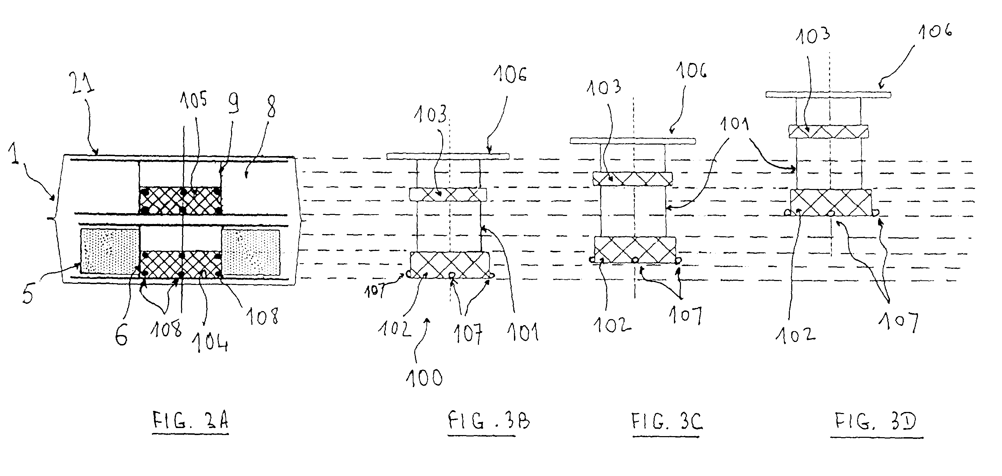

According to an advantageous embodiment illustrated in Figures 3A-3D and 4, the measurement of the footage remaining on the supply spool is provided by means of a removable element 100 which, advantageously, fulfils several functions.

In the embodiment depicted, this removable element 100 has a body 101 cylindrical in shape overall, with a height (along its axis) substantially equal to the height of the cassette, and whose diameter is slightly less than the internal diameter of the cores 6 and 9. The cylindrical body 101 has grooved or ribbed portions 102, 103 suitably positioned in order selectively to rotatably engage one or other (or both) of the cores 6, 9 in the cassette 1, which cores also have corresponding surface portions 104, 105 allowing such a rotational engagement. The element 100 is intended to be inserted into the cassette 1 through the orifice 22 provided in the bottom 21 of the cassette.

Advantageously, the end opposite to the one inserted into the orifice terminates so as to define a surface 106 perpendicular to the axis of the body 101 and whose diameter is substantially equal to or greater than the diameter of the orifice 22 so that, when the element 100 is in a first position (Fig 3B) the surface 106 closes off the orifice 22, thus improving, if necessary, the light-tightness of the cassette when the latter is not being used.

In the embodiment illustrated, each core 6, 9 has, over substantially the lower half of its height, a grooved or ribbed surface 104, 105. Dividing the height of the cylindrical element into eight substantially identical portions, as illustrated in Figures 3B-3D, the driving surfaces (grooved or ribbed) of the element 100 are disposed thus: a first portion 102 situated opposite the surface 106 of a height substantially equal to the surface 104 (that is approximately 1/4 of the height of the cylinder 101); a second surface 103 of a height approximately equal to half the portion 102 (that is approximately 1/8 of the height of the cylinder), and disposed so as to be able to engage, in the position of Figure 3B, the core 9. The other surface portions of the cores 6, 9 and of the element 100 are substantially smooth so as to make it possible, according to the axial position of the element 100 with respect to the cores, to selectively disengage one or other of the cores with respect to the removable element 100.

Advantageously again, the removable element 100 is provided with pins 107 or other elastically deformable means designed to engage in the recesses 108 provided at suitable points on the cores so as to hold the removable element 100 in one or other of the positions depicted in Figures 3B-3D and which will now be explained in more detail.

In the position illustrated in Fig 3B, the element 100 (or plug) is fully inserted into the case so as to advantageously fulfil the light-tight function mentioned previously and to rotatably engage the two cores 6 and 9 so as to rotationally fix them together, suitable means 109 being provided on the plug 100 in order to cooperate with a recess 110 formed in the bottom 21 in order also to immobilise the rollers with respect to the body of the cassette 1. This position is particularly suitable during the transportation of the cassette in order to prevent any unintentional unwinding of the strip.

In the position illustrated in Figure 3C, the plug is moved axially with respect to the cassette so as to rotatably engage only the spool 5. This position makes it possible, as mentioned previously, to measure the footage remaining on the core 6. A plan view of the bottom 21 and plug 100, with the means 123, 124 for reading an angle of rotation or the footage remaining on the core is depicted in Figure 4.

Finally, in the position illustrated in Figure 3D, the plug is moved yet a little further axially with respect to the cassette so as to engage only the core 9. This position, as indicated previously, makes it possible to wind up short lengths of film manually, at the start or end of strip.

In the embodiment which has just been described above, the measurement of the unexposed footage is effected by measuring the angle of rotation of the supply core 6. According to an alternative, it is possible, knowing the total length of the strip in the cassette, to determine the length of unexposed film, from the measurement of the length of exposed film present on the receiving core 9. Thus, according to another embodiment, a given length is unwound from the receiving spool 8, and the angle of rotation of the receiving core 9 is determined. This solution is however not preferred since it offers more accuracy at the start of use of the cassette (large angle of rotation of the receiving core 9) than at the end of the strip (small angle of rotation of the core 9). In practice, it is important to have greater accuracy at the end of the cassette. In addition, because of the angle-reading mechanism suggested in the preferred embodiment of the invention, the reading errors (due to parallax) are greater in the position in Figure 3D than in the position in Figure 3C.

According to another embodiment, each core 6, 9 has over substantially the lower and upper quarters of its heigth, a grooved or ribbed surface, the central portion (about one half of the core) being substantially smooth. Ribbed or grooved portions are provided accordingly on the element 100 so as to selectively engage the first core 6, the second core 9, or both. This solution is preferred in that it provides a more balanced winding and/or unwinding movement.

The invention which has just been described is particularly advantageous in that it provides a simple means for measuring the footage of film remaining within a light-tight case, a means which moreover makes it possible to fulfil other functions. In addition, the concept of the invention requires substantially no modification to the cassette because of the removable character of the means required for implementing it.

In the following description, reference has been made to preferred embodiments of the invention. It is obvious that variants may be made thereto without departing from the spirit of the invention as claimed.

## Claims

1. Cassette for a photosensitive product comprising;
a) a light-tight case;
b) at least one roll of said photosensitive product wound on a core, said core being rotatably mounted inside the case and having a central hole designed to receive a drive component of a camera for the purpose of winding/unwinding the photosensitive product through at least one light-tight slot provided in said case; and
c) means for indicating the quantity of photosensitive product remaining on the core;
wherein said indication means include means for determining the angle of rotation of the core in response to the unwinding of a given length of said photosensitive product, said angle being representative of the quantity of product remaining on the said core.

2. Cassette according to Claim 1, wherein said indication means comprise an element, at least part of which is visible from outside the case and mounted so as to be able to be rotated by the movement of said roll in response to the unwinding of said given length, the case and said element including register means for determining the angle of rotation of the core.

3. Cassette according to Claim 2, wherein the element has a mark whose angular position, after unwinding of said given length, with respect to a graduation scale provided on the case, is representative of the length of photosensitive product remaining on the said core.

4. Cassette according to Claim 2 wherein in that said element is removable.

5. Cassette according to Claim 1, further comprising:
i) a first core on which said photosensitive product is wound before exposure;
ii) a second core designed to receive said photosensitive product after exposure, said first and second cores being mounted so that the photosensitive product follows an endless loop in the course of which the film wound on the first core leaves the case by means of a first light-tight slot, passes in front of an exposure window of said camera and situated outside the case, and winds onto the second core by means of a second light-tight slot.

6. Cassette according to Claim 5, wherein said cores are disposed so as to have their respective central recesses aligned so as to receive, through a principal orifice formed in the case, a drive spindle of said camera, said indication means comprising a removable element designed to be inserted in said principal orifice and to occupy selectively a first axial position with respect to the case and in which said element rotatably engages the first core so that a rotation of the first core in response to the unwinding of said given length causes a corresponding rotation of the removable element.

7. Cassette according to Claim 6, wherein said removable element can selectively occupy a second axial position with respect to the case and in which it rotatably engages the second core.

8. Cassette according to Claim 6, wherein said removable element can selectively occupy a third axial position with respect to the case and in which it rotatably engages the first core and the second core so as to fix them together with respect to rotation, locking means being provided for immobilising the cores with respect to the case.

9. Cassette according to claim 8, wherein the central portion of each of said cores is provided with a substantially smooth portion while portions over substantially the lower and upper quarters of their respective heigth are provided with variations of depth with respect to the smooth portion.

10. Cassette according to Claim 9, wherein the removable element comprises at least one portion provided with variations of depth designed to coincide, at least partially, with corresponding portion provided on each of said first and second cores so as to be able to be put selectively in first, second and third position.

11. Cassette according to Claims 8, wherein said removable element comprises a cylindrical element of a diameter slightly less than the internal diameter of the cores and one end of which has a surface perpendicular to the axis of the cylinder, of a diameter substantially equal to or greater than the diameter of the principal orifice so as to complete the light-tightness of the case when said removable element is in the third position.

12. Cassette according to Claim 6, wherein the removable element and the cores include means designed to cooperate with each other in order to selectively immobilise said removable element in the first, second or third position.

13. Cassette according to Claim 12, wherein said immobilisation means include elastically deformable members provided on the removable element and designed to cooperate with corresponding recesses formed in the internal surface of the cores.

14. Removable element able to be used in a cassette according to Claim 4.

15. Method for measuring the quantity of photosensitive product present on a core rotatably mounted inside a light-tight case, said method comprising the following steps:
a) unwinding a given length of photosensitive product;
b) determining the angle of rotation of the core in response to the unwinding of said given length, said angle being representative the quantity of photosensitive product remaining on the core.
